# EUROPEAN PATENT APPLICATION

(11) **EP 3 640 046 A1**
(43) Date of publication of application: **22.04.2020**
(21) Application number: 18818774.4
(22) Date of filing: 17.04.2018
(51) Int. Cl.: B60C 5/00, B60C 5/01, B60C 9/22

(54) **PNEUMATIC TIRE WITH NOISE ABSORBING MEMBER, AND TIRE RIM ASSEMBLY**

(30) Priority: 14.06.2017 JP 2017117079
(71) Applicant: Bridgestone Corporation, Tokyo 104-8340 (JP)
(72) Inventor: HASEGAWA, Keiichi, Tokyo 104-8340 (JP); MATSUMOTO, Yoshifumi, Tokyo 104-8340 (JP); KOUNO, Yoshihide, Tokyo 104-8340 (JP)
(74) Representative: Oxley, Robin John George
(86) International application number: PCT/JP2018/015913
(87) International publication number: WO 2018/230146

(57) **Abstract**

A pneumatic tire with a noise-absorbing member includes a pneumatic tire and a noise-absorbing member. The pneumatic tire is provided with a spiral belt layer at an outer peripheral side of a tire carcass member. A cord of the spiral belt layer is wound in a helical shape. The noise-absorbing member is attached to an inner peripheral face of the pneumatic tire. Outermost end portions at both sides in the tire width direction of the noise-absorbing member are disposed in a region corresponding to from 80% to 100% of a width dimension BW of the spiral belt layer. The noise-absorbing member absorbs cavity resonance noise produced in a cavity of the pneumatic tire.

## Description

### TECHNICAL FIELD

The present disclosure relates to a pneumatic tire with a noise-absorbing member and to a tire-and-rim assembly.

### BACKGROUND ART

Japanese Patent Application Laid-Open (JP-A) No. 2007-160979 discloses a structure in which a sponge (a noise control body) whose surface has a pitted and bumped shape is disposed at a tire inner face and absorbs cavity resonance noise.

### SUMMARY

### TECHNICAL PROBLEM

However, a sponge as in the conventional example described above also functions as a thermal insulator. Therefore, heat generated in the tread of a pneumatic tire is less likely to dissipate to a cavity interior in regions at which the sponge is disposed. In the conventional pneumatic tire mentioned above, an "intersecting belt" is disposed at an outer peripheral side of a carcass. In the intersecting belt, plural belt plies, in which cords angled relative to a tire circumference direction are coated with rubber, are structured such that the cords in neighboring plies intersect with one another. End portions (referred to as cut ends or free ends) of numerous cords of the belt plies are located at both sides in a ply width direction. When the pneumatic tire turns and tread portions contact and separate from a road surface, the end portions of the cords tend to move.

This is not particularly troublesome in running on ordinary roads. However, in running at high speeds over long periods, movements of the end portions of the cords generate large amounts of heat in vicinities of the end portions of the cords, which is to say vicinities of end portions in a width direction of the intersecting belt. If it is difficult for heat generated at the end portions of the cords to dissipate to the interior cavity of the pneumatic tire, the vicinities of the end portions of the cords reach high temperatures, causing concern about a reduction in thermal durability. Therefore, in consideration of thermal durability at the vicinities of the end portions of the cords, which is to say the vicinities of the end portions of the intersecting belt layer, the sponge must not be disposed in the vicinities of the end portions of the intersecting belt layer. Thus, there is a limit on increasing an amount of the sponge in order to improve the noise absorption effect.

An object of the present disclosure is to provide a pneumatic tire with a noise-absorbing member and a tire-and-rim assembly that may suppress cavity resonance while assuring thermal durability.

### SOLUTION TO PROBLEM

A pneumatic tire with a noise-absorbing member according to a first aspect includes: a pneumatic tire provided with a spiral belt layer at an outer peripheral side of a tire carcass member, a cord of the spiral belt layer being wound in a helical shape; and a noise-absorbing member attached to an inner peripheral face of the pneumatic tire, outermost end portions at both sides in a tire width direction of the noise-absorbing member being disposed in a region corresponding to from 80% to 100% of a width dimension of the spiral belt layer, and the noise-absorbing member absorbing cavity resonance noise produced in a cavity of the pneumatic tire.

### ADVANTAGEOUS EFFECTS OF INVENTION

According to a pneumatic tire according to the present disclosure, excellent effects are provided in that cavity resonance may be suppressed while thermal durability is assured.

### BRIEF DESCRIPTION OF DRAWINGS

Fig. 1 is a sectional diagram showing a state in which a pneumatic tire according to a first exemplary embodiment is cut in a tire axis direction.
Fig. 2 is a magnified sectional diagram showing a state in which a vicinity of a noise-absorbing member of the pneumatic tire according to the first exemplary embodiment is cut in the tire axis direction.
Fig. 3 is a sectional diagram showing a state in which a pneumatic tire according to a second exemplary embodiment is cut in the tire axis direction.
Fig. 4 is a sectional diagram showing a state in which a pneumatic tire according to a third exemplary embodiment is cut in the tire axis direction.
Fig. 5A is a sectional view showing an example of a cross-sectional shape of a noise-absorbing member of the pneumatic tire according to the third exemplary embodiment.
Fig. 5B is a sectional view showing another example of the cross-sectional shape of the noise-absorbing member of the pneumatic tire according to the third exemplary embodiment.
Fig. 5C is a sectional view showing another example of the cross-sectional shape of the noise-absorbing member of the pneumatic tire according to the third exemplary embodiment.
Fig. 5D is a sectional view showing another example of the cross-sectional shape of the noise-absorbing member of the pneumatic tire according to the third exemplary embodiment.
Fig. 5E is a sectional view showing another example of the cross-sectional shape of the noise-absorbing member of the pneumatic tire according to the third exemplary embodiment.
Fig. 6 is a sectional diagram showing a state in which a pneumatic tire according to a fourth exemplary embodiment is cut in the tire axis direction.
Fig. 7 is a sectional diagram showing a state in which a pneumatic tire according to a fifth exemplary embodiment is cut in the tire axis direction.
Fig. 8 is a sectional diagram showing a state in which a pneumatic tire according to a sixth exemplary embodiment is cut in the tire axis direction.

### DETAILED DESCRIPTION

### - First Exemplary Embodiment -

Hereinafter, an embodiment for carrying out the present disclosure is described in accordance with the drawings. In the drawings, the direction of arrow C indicates the tire circumference direction of the pneumatic tire, the direction of arrow R indicates the tire radius direction of the pneumatic tire, and the direction of arrow W indicates the tire width direction of the pneumatic tire. The meaning of the term "tire radius direction" is intended to include directions orthogonal to the turning axis of the pneumatic tire (not shown in the drawings). The meaning of the term "tire width direction" is intended to include a direction parallel to the tire turning axis. The term "tire width direction" may be substituted with the term "tire axis direction". Methods of measuring dimensions of respective parts accord with the methods described in the Japan Automobile Tire Manufacturers Association, Inc. (JATMA) Year Book 2017.

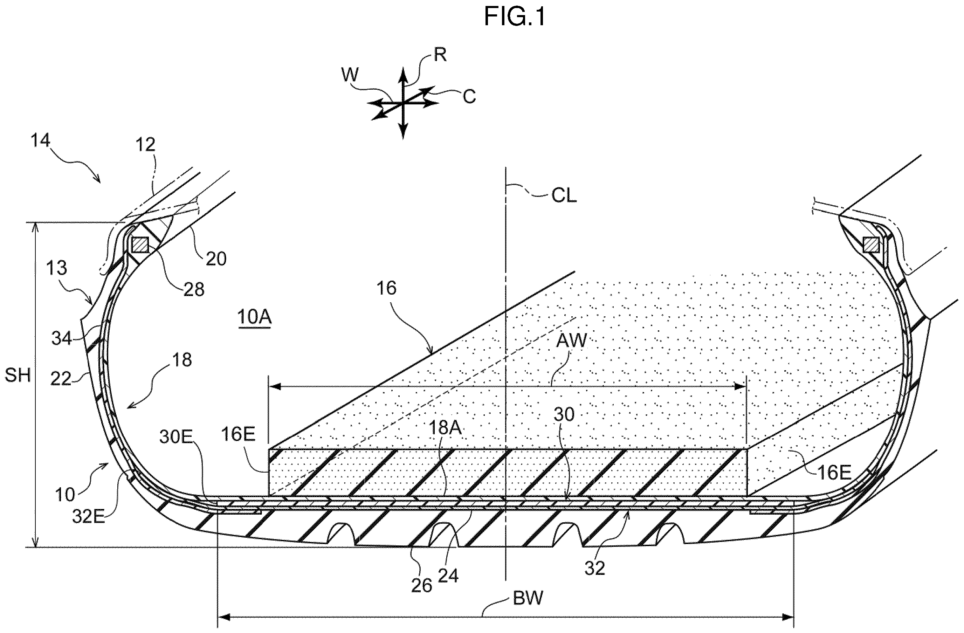

In Fig. 1, a tire-and-rim assembly 14 includes a pneumatic tire 10, a rim 12 on which the pneumatic tire 10 is mounted, and a noise-absorbing member 16 that is disposed inside the pneumatic tire 10. In the present exemplary embodiment, the pneumatic tire 10 inside which the noise-absorbing member 16 is retained is referred to as a pneumatic tire with noise-absorbing member 13.

### Tire Carcass Member

At least a tire inner face 18A of a tire carcass member 18 is constituted of a resin material. For example, the tire carcass member 18 is constituted completely of a thermoplastic resin material. More specifically, the tire carcass member 18 is formed in an annular shape in the tire circumference direction by a pair of tire pieces (not shown in the drawings) that are constituted of the resin material being joined in the tire axis direction at a tire equatorial plane CL. The tire carcass member 18 may instead be formed by joining three or more tire pieces.

The tire carcass member 18 includes a pair of bead portions 20, a pair of side portions 22 that respectively extend to an outer side in a tire radius direction from the pair of bead portions 20, and a crown portion 24 that extends to inner sides in the tire width direction from the side portions 22.

In the present exemplary embodiment, regions of the tire carcass member 18 up to 30% of a section height SH of the tire carcass member 18 from an inner side end thereof in the tire radius direction are referred to as the bead portions 20, and a region of the tire carcass member 18 at which a tread 26 is disposed is referred to as the crown portion 24. The tread 26 according to the present exemplary embodiment is formed of a rubber material that is commonly employed in the treads of pneumatic tires.

A thermoplastic resin, thermoplastic elastomer (TPE), thermosetting resin or the like with a resilience equivalent to rubber may be employed as the resin material constituting the tire carcass member 18. In consideration of resilience during running and moldability during fabrication, it is desirable to employ a thermoplastic elastomer. The whole of the tire carcass member 18 may be formed of this resin material, or just a portion of the tire carcass member 18 may be formed of this resin material.

As a thermoplastic elastomer, polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV) and the like may be used.

As a thermoplastic resin, polyurethane resins, polyolefin resins, vinyl chloride resins, polyamide resins and the like may be used. For example, a thermoplastic resin material that may be employed has a deflection temperature under load as defined in ISO 75-2 or ASTM D648 (0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

A bead core 28 is embedded in each bead portion 20 of the tire carcass member 18. A metal, organic fiber, organic fiber covered with resin, metal fiber covered with resin, hard resin or the like may be employed as a material constituting the bead core 28. Note that the bead core 28 may be omitted, provided stiffness of the bead portion 20 is assured and there is no problem with tight fitting to the rim 12.

### Belt Layer

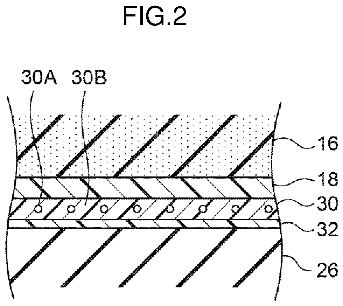

A spiral belt layer 30 is provided at an outer side in the tire radius direction of the tire carcass member 18, specifically at an outer peripheral face of the crown portion 24. As illustrated in Fig. 2, the spiral belt layer 30 is formed by, for example, winding cords 30A covered with a resin 30B in helical shapes along the tire circumference direction. Steel cords may be employed as the cords 30A used for the spiral belt layer 30, or organic fiber cords may be employed. The resin 30B employed to cover the cords 30A may be a resin that is stiffer than the rubber material employed for the tread 26. The same kind of resin material as that of the tire carcass member 18 may be employed as the resin 30B covering the cords 30A. The stiffness referred to herein is a value measured by a durometer (JIS K6253, type A). A width direction center of the spiral belt layer 30 coincides with the tire equatorial plane CL.

### Belt Reinforcement Layer

As shown in Fig. 1, a belt reinforcement layer 32 that covers the spiral belt layer 30 is disposed at an outer side in the tire radius direction of the spiral belt layer 30. The belt reinforcement layer 32 extends over an end portion 30E of the spiral belt layer 30 from the tire equatorial plane CL side thereof to the outer side in the tire width direction thereof and terminates in a vicinity of a boundary between the side portion 22 and the crown portion 24.

The belt reinforcement layer 32 is provided with plural reinforcing cords covered with rubber (not shown in the drawings). The reinforcing cords of the belt reinforcement layer 32 are monofilaments (single strands) of organic fiber or multifilaments (twisted strands) in which organic fibers are twisted together. The reinforcing cords extend in the tire width direction and are arrayed in the tire circumference direction. The reinforcing cords of the belt reinforcement layer 32 may be angled at an angle of 10° or less relative to the tire width direction.

A material such as an aliphatic polyamide, polyethylene tetraphthalate (PET), glass, alamide or the like may be employed for the organic fibers. A metal such as steel or the like may also be employed for the material of the reinforcing cords. The belt reinforcement layer 32 may have a structure in which the reinforcing cords are covered with a resin instead of a rubber.

### Side Reinforcement Layer

A side reinforcement layer 34 is disposed at each tire outer side face of the tire carcass member 18. The side reinforcement layer 34 extends from the inner side in the tire radius direction of the bead core 28 along the outer face of the tire carcass member 18 toward the outer side in the tire radius direction. The side reinforcement layer 34 extends further along an outer face of the belt reinforcement layer 32 toward the tire equatorial plane CL side, passing over an end portion 32E of the belt reinforcement layer 32 and the end portion 30E of the belt layer 30, and terminates in a vicinity of the end portion 30E.

The side reinforcement layer 34 is provided with plural reinforcing cords covered with rubber. The reinforcing cords of the side reinforcement layer 34 are monofilaments (single strands) of organic fiber or multifilaments (twisted strands) in which organic fibers are twisted together. The reinforcing cords extend in respective radial directions (the tire radius direction) and are arrayed in the tire circumference direction. The reinforcing cords of the side reinforcement layer 34 may be angled at an angle of 10° or less relative to the tire radius direction.

A material such as an aliphatic polyamide, PET, glass, alamide or the like may be employed for the organic fibers. A metal such as steel or the like may also be employed for the material of the reinforcing cords. The side reinforcement layer 34 may have a structure in which the reinforcing cords are covered with a resin instead of a rubber.

### Noise-Absorbing Member

In Fig. 1, the noise-absorbing member 16 is constituted of a thermoplastic resin material, is capable of absorbing noise, and is fixed to the tire inner face 18A by an adhesive, welding or the like. The noise-absorbing member 16 is, for example, a sheet-shaped porous body of a sponge, a foam resin or the like. The noise-absorbing member 16 is capable of absorbing cavity resonance noise generated in a cavity 10A of the pneumatic tire 10.

If a width of the spiral belt layer 30 is represented by BW and a width of the noise-absorbing member 16 is represented by AW, AW is specified to be within a range of from 80% ro 100% of BW. That is, outermost end portions 16E at both sides in the tire width direction of the noise-absorbing member 16 are disposed in a region corresponding to from 80% to 100% of the width BW of the spiral belt layer 30. In other words, each end portion 16E of the noise-absorbing member 16 is disposed within a region corresponding to from 40% to 50% of the width BW of the spiral belt layer 30 from the tire equatorial plane CL toward the outer side in the tire width direction. A width direction center of the noise-absorbing member 16 coincides with the tire equatorial plane CL.

### Operation

The tire-and-rim assembly 14 according to the present exemplary embodiment is structured as described above and operations thereof are described below.

The noise-absorbing member 16 of the tire-and-rim assembly 14 absorbs cavity resonance noise generated in the cavity 10A of the pneumatic tire 10.

The spiral belt layer 30 disposed at the outer peripheral side of the tire carcass member 18 is structured by the cords 30A being wound in helical shapes. Therefore, at both end portions in the width direction of the spiral belt layer 30, there are not numerous cord ends located along the tire circumference direction. The cord ends tend to move when the tire is turning and cause heat generation, as in an intersecting belt. Therefore, heat generation in the vicinities of the end portions 30E of the spiral belt layer 30 is less than in an intersecting belt layer, the noise-absorbing member 16 may be arranged as far as vicinities of the end portions 30E of the spiral belt layer 30, and the effect of absorbing cavity resonance noise may be improved.

Thus, in the tire-and-rim assembly 14 according to the present exemplary embodiment, because the spiral belt layer 30 is disposed at the outer peripheral side of the tire carcass member 18 and the end portions 16E that are outermost at both sides in the tire width direction of the noise-absorbing member 16 are disposed in the region corresponding to from 80% to 100% of the width BW of the spiral belt layer 30, the noise absorption effect may be improved compared to a conventional tire-and-rim assembly that employs a pneumatic tire provided with an intersecting belt. Thus, both the noise absorption effect and thermal durability may be provided.

### - Second Exemplary Embodiment -

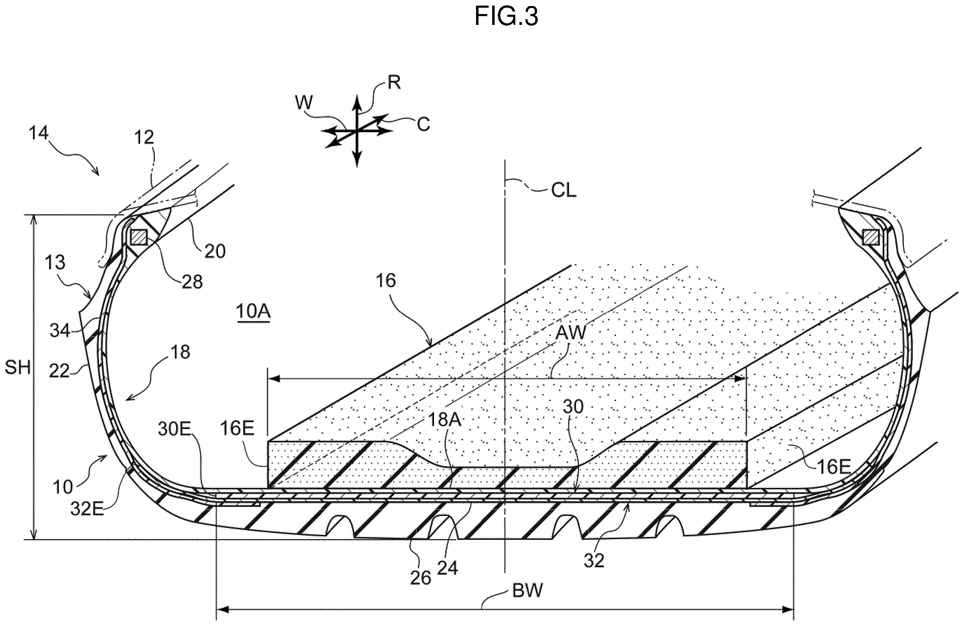

The tire-and-rim assembly 14 according to a second exemplary embodiment of the present disclosure is described in accordance with Fig. 3. Structures that are the same as in the first exemplary embodiment are assigned the same reference symbols and are not described here.

As shown in Fig. 3, a central region in a width direction of a noise-absorbing member 16 employed in the tire-and-rim assembly 14 according to the present exemplary embodiment is thinner than regions thereof at either side in the width direction.

Therefore, a thermal insulation effect is reduced at a central portion in the width direction of the noise-absorbing member 16, and heat dissipates more easily into the cavity 10A at a central portion in the width direction of the pneumatic tire 10. Consequently, a rise in temperature of a central vicinity in the width direction of the pneumatic tire 10 may be suppressed and a reduction in thermal durability of the central portion in the width direction of the pneumatic tire 10 may be restrained.

### - Third Exemplary Embodiment -

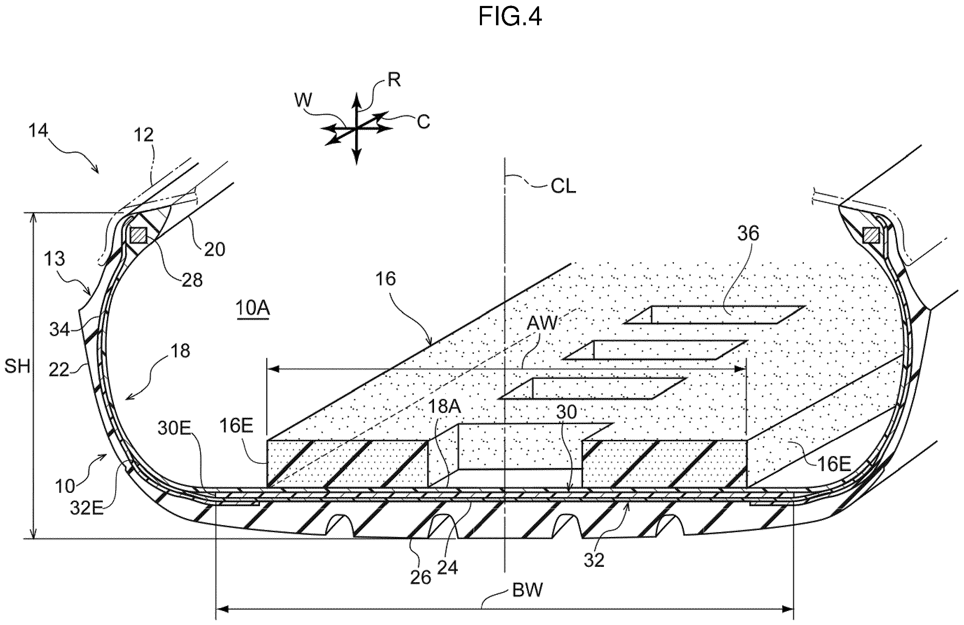

The tire-and-rim assembly 14 according to a third exemplary embodiment of the present disclosure is described in accordance with Fig. 4. Structures that are the same as in the first exemplary embodiment are assigned the same reference symbols and are not described here.

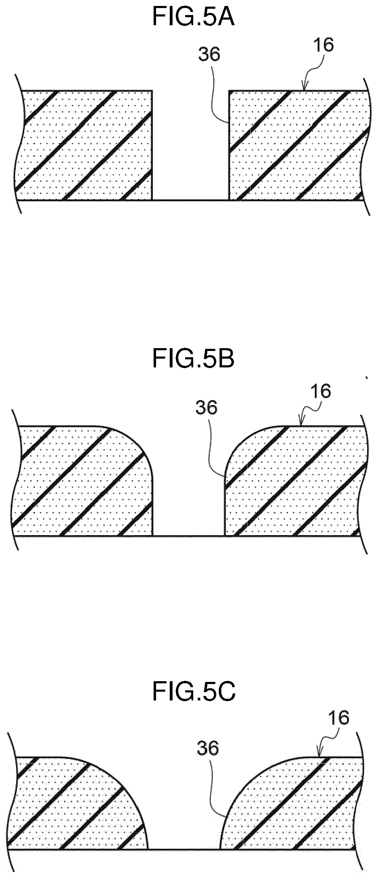

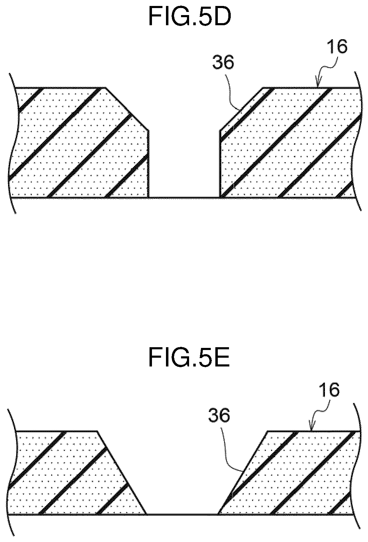

As shown in Fig. 4, heat dissipation holes 36 are formed at central portions in a width direction of a noise-absorbing member 16 employed in the tire-and-rim assembly 14 according to the present exemplary embodiment. The tire inner face 18A of the tire carcass member 18 of the pneumatic tire 10 is exposed through the heat dissipation holes 36. The heat dissipation holes 36 are formed to open at a constant spacing in the tire circumference direction. As shown in Fig. 5A, a cross-sectional shape of each heat dissipation hole 36 may have a constant width. As shown in Fig. 5B, the cross-sectional shape of each heat dissipation hole 36 may have a constant width from a side at which the tire carcass member 18 is disposed to a central portion thereof and a shape (a "curved bevel" shape) that progressively widens from the central portion to an inner periphery. As shown in Fig. 5C, the cross-sectional shape of each heat dissipation hole 36 may have a shape that progressively widens from a side at which the tire carcass member 18 is disposed to an inner periphery. As shown in Fig. 5D, the cross-sectional shape of each heat dissipation hole 36 may have a constant width from a side at which the tire carcass member 18 is disposed to a central portion thereof and be formed with chamfers (angled surfaces) from the central portion to an inner peripheral side. As shown in Fig. 5E, the cross-sectional shape of each heat dissipation hole 36 may have angled surfaces from a side at which the tire carcass member 18 is disposed to an inner peripheral side. Shapes of the heat dissipation holes 36 according to the present exemplary embodiment are rectangular but may be alternative shapes such as circles or the like.

In the tire-and-rim assembly 14 according to the present exemplary embodiment, because the heat dissipation holes 36 exposing the tire inner face 18A of the pneumatic tire 10 are formed at the central portion in the width direction of the noise-absorbing member 16, heat generated at the central portion in the width direction of the spiral belt layer 30 may dissipate into the cavity 10A via the heat dissipation holes 36. Therefore, a rise in temperature of a central vicinity in the width direction of the pneumatic tire 10 may be suppressed and a reduction in thermal durability of the central portion in the width direction of the pneumatic tire 10 may be restrained.

### - Fourth Exemplary Embodiment -

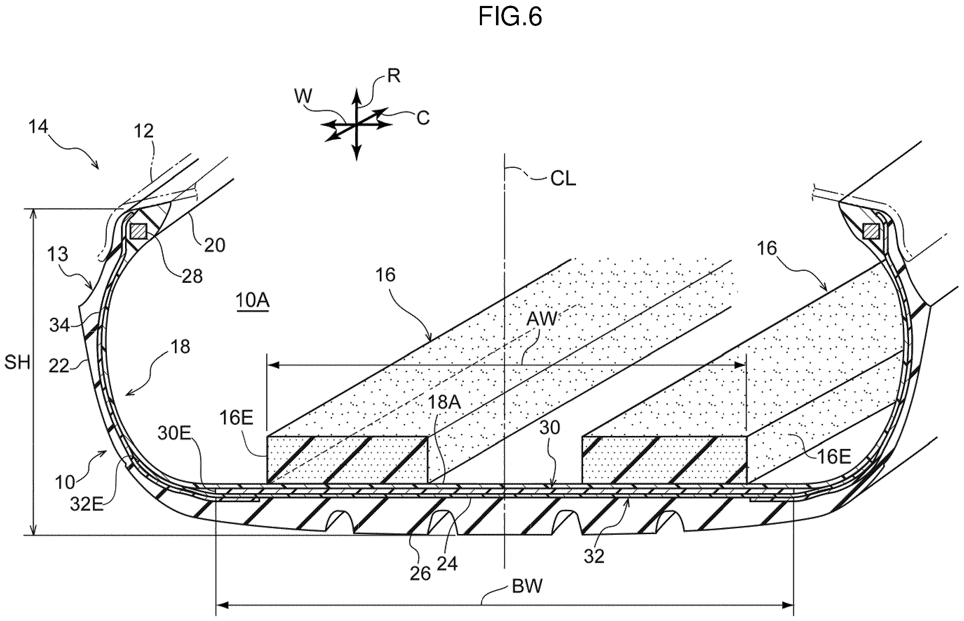

The tire-and-rim assembly 14 according to a fourth exemplary embodiment of the present disclosure is described in accordance with Fig. 6. Structures that are the same as in the first exemplary embodiment are assigned the same reference symbols and are not described here.

In the tire-and-rim assembly 14 according to the present exemplary embodiment, a noise-absorbing member 16 is provided at both sides of the tire equatorial plane CL, and the tire inner face 18A of the tire carcass member 18 of the pneumatic tire 10 is exposed at a gap between the noise-absorbing member 16 at one side of the tire equatorial plane CL and the noise-absorbing member 16 at the other side. As a result, heat generated at a central portion in a width direction of the spiral belt layer 30 may dissipate into the cavity 10A from the exposed tire inner face 18A. Therefore, a rise in temperature of a central vicinity in the width direction of the pneumatic tire 10 may be suppressed and a reduction in thermal durability may be restrained.

### - Fifth Exemplary Embodiment -

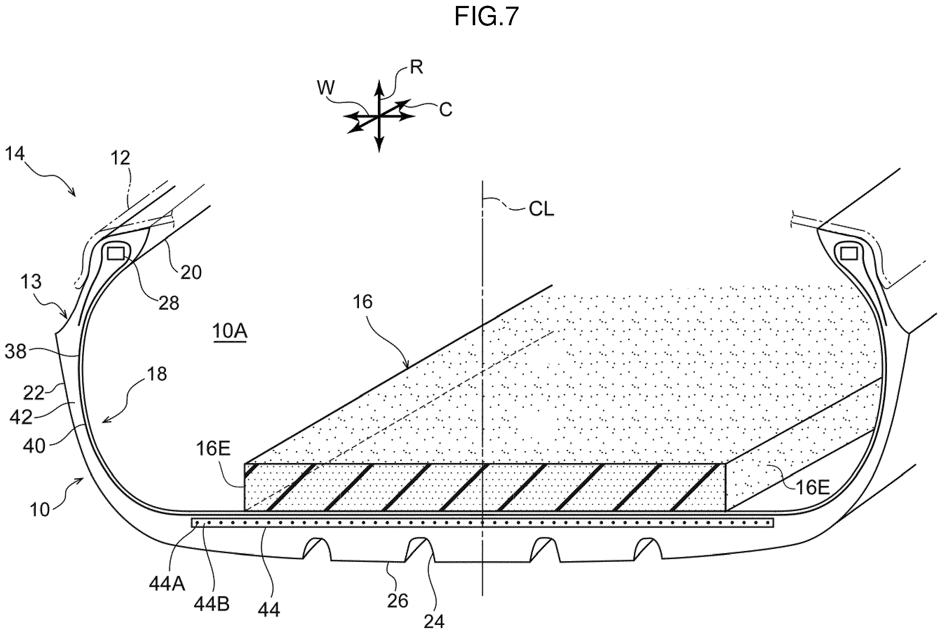

The tire-and-rim assembly 14 according to a fifth exemplary embodiment of the present disclosure is described in accordance with Fig. 7. Structures that are the same as in the first exemplary embodiment are assigned the same reference symbols and are not described here.

In the pneumatic tire 10 according to any of the first to fourth exemplary embodiments described above, the tire carcass member 18 is fabricated of resin. However, the pneumatic tire 10 according to the present exemplary embodiment is a tire in which a resilient body structuring the tire carcass member 18 is vulcanized rubber, the pneumatic tire 10 is an ordinary conventional "rubber tire".

The pneumatic tire 10 according to the present exemplary embodiment is provided with a carcass 40 constituted with one or a plural number of carcass plies 38. Both end portions of each carcass ply 38 are wound around the bead cores 28 embedded in the bead portions 20 and wound back from a tire inner side to an outer side. In the carcass ply 38, a plural number of cords (for example, organic fiber cords) extending in radial directions are arrayed in parallel and embedded in a coating rubber.

A side rubber layer 42 that forms the bead portion 20 and the side portion 22 is provided at each outer side in a tire axis direction of the carcass 40.

A spiral belt layer 44 is provided at an outer side in a tire radius direction of the carcass 40. The spiral belt layer 44 according to the present exemplary embodiment is formed by, for example, winding a long, thin, rubber-coated cord or a belt-shaped ply in a helical shape. In the rubber coated cord, a single cord 44A is covered with an unvulcanized coating rubber. In the belt-shaped ply, a plural number of the cords 44A are covered with an unvulcanized coating rubber 44B. Cord directions are set substantially in the tire circumference direction. A steel cord may be employed as each cord 44A of the spiral belt layer 44, or an organic fiber cord may be employed.

The tread 26 is formed of a rubber material and is disposed at an outer side in the tire radius direction of the spiral belt layer 44.

In the tire-and-rim assembly 14 according to the present exemplary embodiment, similarly to the first to fourth exemplary embodiments, the noise-absorbing member 16 is provided at an inner peripheral face of the pneumatic tire 10. Therefore, similarly to the first exemplary embodiment, the tire-and-rim assembly 14 according to the present exemplary embodiment may improve the noise absorption effect compared to a conventional tire-and-rim assembly that employs a pneumatic tire provided with an intersecting belt. Thus, both the noise absorption effect and thermal durability may be provided.

### - Sixth Exemplary Embodiment -

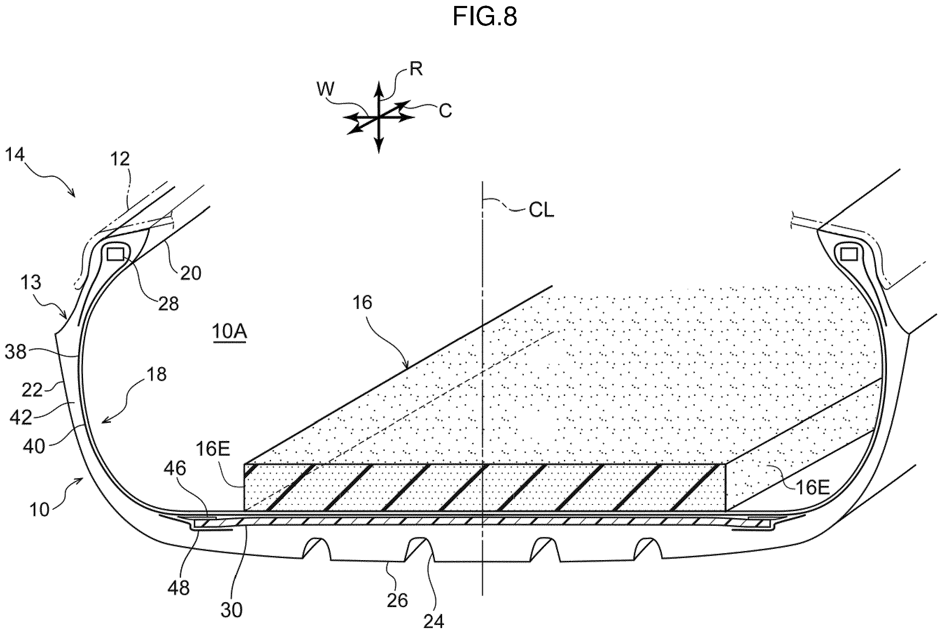

The tire-and-rim assembly 14 according to a sixth exemplary embodiment of the present disclosure is described in accordance with Fig. 8. The present exemplary embodiment is a variant example of the fifth exemplary embodiment, in which the structure of the pneumatic tire 10 is partially different. Structures that are the same as in the fifth exemplary embodiment are assigned the same reference symbols and are not described here.

As shown in Fig. 8, in the pneumatic tire 10 according to the present exemplary embodiment, the spiral belt layer 30 is provided at the outer side in the tire radius direction of the carcass 40 with the structure in which the cords 30A (not shown in the drawing) coated with the resin 30B (not shown in the drawing) are wound in the helical shape in the tire circumference direction, the same as in the first exemplary embodiment.

An annular base ring 46 formed of resin is disposed between each end portion of the spiral belt layer 30 and the carcass 40. A belt end reinforcement layer 48 is disposed between each end portion of the spiral belt layer 30 and the tread 26. The belt end reinforcement layer 48 is formed of plural reinforcing cords covered with rubber.

The noise-absorbing member 16 according to any of the first to fourth exemplary embodiments is provided at the inner peripheral face of the pneumatic tire 10 according to the present exemplary embodiment. Therefore, similarly to the first exemplary embodiment, the tire-and-rim assembly 14 according to the present exemplary embodiment may improve the noise absorption effect compared to a conventional tire-and-rim assembly that employs a pneumatic tire provided with an intersecting belt. Thus, both the noise absorption effect and thermal durability may be provided.

### - Seventh Exemplary Embodiment -

The tire-and-rim assembly 14 according to a seventh exemplary embodiment of the present disclosure is described.

Although not shown in the drawings, the pneumatic tire 10 employed in the present exemplary embodiment is the pneumatic tire 10 according to the first exemplary embodiment but with the spiral belt layer 30, in which the cords 30A covered with the resin 30B are wound in the helical shape in the tire circumference direction, being replaced with the spiral belt layer 44 that is employed in the pneumatic tire 10 according to the fifth exemplary embodiment, which is formed of rubber-covered cords.

The noise-absorbing member 16 according to any of the first to fourth exemplary embodiments is provided at the inner peripheral face of the pneumatic tire 10 according to the present exemplary embodiment. Therefore, similarly to the first exemplary embodiment, the tire-and-rim assembly 14 according to the present exemplary embodiment may improve the noise absorption effect compared to a conventional tire-and-rim assembly that employs a pneumatic tire provided with an intersecting belt. Thus, both the noise absorption effect and thermal durability may be provided.

### - Examples -

To verify the effects of the present disclosure, operations and functions of three tire-and-rim assemblies according to Comparative Examples and two tire-and-rim assemblies according to Examples applying the present disclosure were compared.

Structures of the tire and rim assemblies employed in tests are described below.
Comparative Example 1 tire-and-rim assembly: Basic structure was the same as the tire-and-rim assembly shown in Fig. 1, but the width of the noise-absorbing member was set to 75% of the width of the spiral belt layer.
Comparative Example 2 tire-and-rim assembly: Basic structure was the same as the tire-and-rim assembly shown in Fig. 1, but the width of the noise-absorbing member was set to 105% of the width of the spiral belt layer.
Comparative Example 3 tire-and-rim assembly: Structure was the same as the tire-and-rim assembly shown in Fig. 1, except that the spiral belt layer was replaced with an intersecting layer formed of two belt plies and the noise-absorbing member was omitted.

Example 1 tire-and-rim assembly: Basic structure was the same as the tire-and-rim assembly shown in Fig. 1, and the width of the noise-absorbing member was set to 80% of the width of the spiral belt layer.

Example 21 tire-and-rim assembly: Basic structure was the same as the tire-and-rim assembly shown in Fig. 1, and the width of the noise-absorbing member was set to 100% of the width of the spiral belt layer.

The noise absorbing members that were employed had constant thicknesses, as illustrated in Fig. 1.

Below, test procedures and evaluation procedures are described.

Noise absorption effect: Noise measurement in the vehicle cabin
A road noise reduction effect was evaluated by mounting each tire to a test vehicle, running at 60 km/h on an asphalt surface, and measuring peak values of noise in the vicinity of 200 Hz in the vehicle cabin. The evaluation is represented by an index, larger values of which represent an improved noise absorption effect.

Thermal durability: High speed endurance test
High speed endurance was evaluated by turning the tire on a drum while loaded with a weight corresponding to a maximum loading capacity and conducting a high speed endurance test in which turning speed was measured until the tire failed.

**Table 1**

| | Comparative Example 1 | Example 1 | Example 2 | Comparative Example 2 | Comparative Example 3 |
|---|---|---|---|---|---|
| Width of noise-absorbing member relative to width of spiral belt layer | 75% | 80% | 100% | 105% | No noise-absorbing member |
| Noise absorption effect | 90 | 98 | 100 | 100 | - |
| Thermal durability | 100 | 100 | 80 | 80 | 100 |
| Remarks | | | | After the test, end portions of the noise-absorbing member had detached. | No noise-absorbing member; 2-ply intersecting belt layer |

For thermal durability, an index of at least 80 indicates no problem for practical use.

From the results of the tests, it can be seen that, compared to Comparative Example 1 and Comparative Example 3 (which corresponds to conventional technologies in which there is no noise absorption effect from a noise-absorbing member because there is no noise-absorbing member), the noise absorption effect could be improved by setting the width of the noise absorbing member relative to the width of the spiral belt layer to a region corresponding to from 80% to 100%. It can also be seen that both the noise absorption effect and thermal durability could be provided.

### - Alternative Embodiments -

Hereabove, examples of embodiments of the present disclosure have been described. Embodiments of the present disclosure are not limited by these descriptions and it will be clear that numerous modifications beyond these descriptions may be embodied within a technical scope not departing from the scope of the invention.

In the first to fourth exemplary embodiments, the tire carcass member 18 of the pneumatic tire 10 is constituted of a resin material. However, as in the fifth exemplary embodiment and the sixth exemplary embodiment, the pneumatic tire 10 may be a "rubber tire" in which the tire carcass member 18 includes a carcass ply and a rubber layer covering the carcass ply (note that the spiral belt layer is at the outer side in the tire radius direction of the carcass).

The disclosures of Japanese Patent Application No. 2017-117079 filed June 14, 2016 are incorporated into the present specification by reference in their entirety.

All references, patent applications and technical specifications cited in the present specification are incorporated by reference into the present specification to the same extent as if the individual references, patent applications and technical specifications were specifically and individually recited as being incorporated by reference.

## Claims

1. A pneumatic tire with a noise-absorbing member, comprising:
a pneumatic tire provided with a spiral belt layer at an outer peripheral side of a tire carcass member, a cord of the spiral belt layer being wound in a helical shape; and
a noise-absorbing member attached to an inner peripheral face of the pneumatic tire, outermost end portions at both sides in a tire width direction of the noise-absorbing member being disposed in a region corresponding to from 80% to 100% of a width dimension of the spiral belt layer, and the noise-absorbing member absorbing cavity resonance noise produced in a cavity of the pneumatic tire.

2. The pneumatic tire with a noise-absorbing member according to claim 1, wherein a central portion, in a width direction, of the noise-absorbing member is thinner than either side, in the width direction, of the noise-absorbing member.

3. The pneumatic tire with a noise-absorbing member according to claim 1, wherein a heat dissipation hole is formed at a central portion, in a width direction, of the noise-absorbing member, the heat dissipation hole exposing the inner peripheral face of the pneumatic tire.

4. The pneumatic tire with a noise-absorbing member according to any one of claims 1 to 3, wherein the noise-absorbing member is provided at both sides of a tire equatorial plane, and the inner peripheral face of the pneumatic tire is exposed at a gap between the noise-absorbing member at one side of the tire equatorial plane and the noise-absorbing member at the other side.

5. The pneumatic tire with a noise-absorbing member according to any one of claims 1 to 4, wherein the cord is covered with a resin that is stiffer than a member configuring a tread disposed at the outer peripheral side of the tire carcass member.

6. A tire-and-rim assembly, comprising:
a rim; and
the pneumatic tire with a noise-absorbing member according to any one of claims 1 to 5, the pneumatic tire with a noise-absorbing member being mounted at the rim.
